# EUROPÄISCHE PATENTSCHRIFT

(11) **EP 2 755 842 B1**
(45) Veröffentlichungstag und Bekanntmachung des Hinweises auf die Patenterteilung: **18.01.2017**
(21) Anmeldenummer: 12772085.2
(22) Anmeldetag: 13.09.2012
(51) Int. Cl.: B60K 35/00, B60K 37/06, G02F 1/1333, G02F 1/1347, G04G 9/00, G02F 1/1335

(54) **VERFAHREN ZUR INTEGRATION EINES FLÜSSIGKRISTALLBILDSCHIRMS IN EINEN TRÄGER UND FLÜSSIGKRISTALLBILDSCHIRMANORDNUNG**
METHOD FOR INTEGRATING A LIQUID CRYSTAL SCREEN INTO A CARRIER AND LIQUID CRYSTAL SCREEN ARRANGEMENT
PROCEDE D'INTÉGRATION D'UN ÉCRAN À CRISTAUX LIQUIDES DANS UN SUPPORT ET ENSEMBLE ÉCRAN À CRISTAUX LIQUIDES

(30) Priorität: 13.09.2011 DE 102011112929
(43) Veröffentlichungstag der Anmeldung: 23.07.2014
(73) Patentinhaber: Johnson Controls Automotive Electronics GmbH, 75196 Remchingen (DE)
(72) Erfinder: RAWER, Marc, 70327 Stuttgart (DE); SÜSS, Manfred, 75196 Remchingen (DE)
(74) Vertreter: Loock, Jan Pieter
(86) Internationale Anmeldenummer: PCT/EP2012/067964
(87) Internationale Veröffentlichungsnummer: WO 2013/037895

(56) Entgegenhaltungen:
- EP-A1- 0 028 294
- EP-A1- 1 973 089
- DE-A1-102009 048 682
- US-A1- 2010 053 499

## Beschreibung

### Stand der Technik

Bei der frontrahmenlosen Integration von Flüssigkristallbildschirmen in eine Instrumententafel eines Kraftfahrzeugs ("seamless integration" oder "flush integration") werden herkömmlicherweise Polarisationsfolien auf den Bildschirm aufgebracht, um Reflexionen von Sonnenlicht zu reduzieren.

Nachteilig ist jedoch am Stand der Technik, dass Feuchtigkeit in oder unter die Polarisationsfolie eindringen kann, was zu einem irreversiblen Ablösen und/oder Aufquellen der Polarisationsfolie führt. Weiterhin ist die Kante der Polarisationsfolie für Passagiere zugänglich und könnte abgezogen werden.

Ein Verfahren zur Integration eines Flüssigkristallbildschirms in einen Träger mit den Merkmalen des Oberbegriffs des Anspruchs 1 ist aus der US 2010/0053499 A1 bekannt.

### Offenbarung der Erfindung

Es ist daher die Aufgabe der vorliegenden Erfindung, die Integration von Flüssigkristallbildschirmen in eine Instrumententafel zu verbessern, indem die Gefahr des Ablösens und/oder Aufquellens der Polarisationsfolie reduziert bzw. ausgeräumt wird.

Gelöst wird diese Aufgabe durch ein Verfahren zur Integration eines Flüssigkristallbildschirms in einen Träger, wobei in einem ersten Schritt ein Flüssigkristallbildschirm bereitgestellt wird, wobei in einem zweiten Schritt eine Polarisationsfolie auf den Flüssigkristallbildschirm aufgebracht wird, bevorzugt aufgeklebt, und wobei in einem dritten Schritt ein Rand bzw. Kanten der Polarisationsfolie zumindest teilweise mit einem Abdichtmittel, bevorzugt ein Klarlack, abgedichtet wird.

In vorteilhafter Weise wird bei dem erfindungsgemäßen Verfahren der Rand bzw. die Kanten der Polarisationsfolie mit dem Abdichtmittel abgedichtet, so dass im Gegensatz zum Stand der Technik ein Eindringen von Feuchtigkeit vermieden wird und somit die Gefahr des Ablösens und/oder Aufquellens der Polarisationsfolie ausgeräumt wird.

Erfindungsgemäß wird in einem vierten Schritt der Flüssigkristallbildschirm in einen Träger, bevorzugt aus einem Plastikmaterial und besonders bevorzugt eine Instrumententafel eines Kraftfahrzeugs, eingesetzt und mit dem Träger, bevorzugt durch Kleben, verbunden, wobei ein Zwischenraum, der sich zwischen der Polarisationsfolie einerseits und dem Träger andererseits bildet, abgedichtet wird. Erfindungsgemäß wird zur Abdichtung des Zwischenraums ein Lack bzw. ein Klarlack auf den Träger und die Polarisationsfolie aufgebracht.

Ein weiterer Gegenstand der vorliegenden Erfindung ist ein Flüssigkristallbildschirm bzw. eine Flüssigkristallbildschirmanordnung aufweisend eine Flüssigkristallanordnung und eine die Flüssigkristallanordnung beleuchtende Hintergrundbeleuchtung, wobei die Flüssigkristallanordnung mit einer Polarisationsfolie bedeckt ist und wobei der Flüssigkristallbildschirm und/oder die Polarisationsfolie zumindest teilweise mit einem Abdichtmittel, bevorzugt mit einem Klarlack, bedeckt ist.

Durch das Abdichten des Zwischenraums wird vorteilhaft verhindert, dass Feuchtigkeit in oder unter die Polarisationsfolie eindringen kann, wodurch die Haltbarkeit der Polarisationsfolie wesentlich verbessert werden kann.

Bevorzugt ist vorgesehen, dass die Polarisationsfolie zumindest teilweise über einen Rand und/oder über Kanten des Flüssigkristallbildschirms ragt bzw. den Rand und/oder die Kanten des Flüssigkristallbildschirms überlappt. Derjenige Teil der Polarisationsfolie, der über den Rand des Flüssigkristallbildschirms ragt, wird ebenfalls mit dem Träger verbunden, bevorzugt verklebt. Dadurch ist eine flexible Anpassung der Polarisationsfolie an unterschiedliche Träger möglich. Bevorzugt wird die Polarisationsfolie an ihren Kanten abgerundet, sodass sich vorteilhaft ein vergleichsweise guter ästhetischer Eindruck erreichen lässt.

Die Verbindung von der Polarisationsfolie und dem Flüssigkristallbildschirm erfolgt bevorzugt unter Verwendung eines Additivverfahrens, wie z. B. eines Haftverfahrens, einer Verklebung und/oder eines Laminierungsverfahrens.

Bevorzugt wird vor der Abdichtung ein aktiver Bereich, d. h. ein zur Nutzung des Flüssigkristallbildschirms verwendeter Bereich des Flüssigkristallbildschirms, zunächst abgedeckt und danach wird der Flüssigkristallbildschirm bzw. die Polarisationsfolie an den Kanten umlaufend mit dem Abdichtmittel versehen. Das Abdichtmittel dient zur Abdichtung des Zwischenraums, der Polarisationsfolie bzw. einer Polarisationsfolienkante gegen Feuchtigkeit. Das Abdichtmittel kann auch genutzt werden, um die Ecken des Flüssigkristallbildschirms bzw. eines Glassubstrates des Flüssigkristallbildschirms runder zu gestalten, um die Verletzungsgefahr der Insassen, z. B. bei einem Unfall, zu verringern und/oder um Kopf-Aufschlag-Tests bestehen zu können. Durch das Abdichten mit dem Abdichtmittel können weiterhin vorteilhaft die tieferliegenden Bestandteile des Flüssigkristallbildschirms und die sichtbare Oberfläche (A-surface) des Trägers bedeckt werden. Durch das Aufbringen der Polarisationsfolie auf den Flüssigkristallbildschirm kann vorteilhaft auf eine Abdecklinse verzichtet werden. Außerdem entstehen durch die Polarisationsfolie keine negativen Einflüsse auf die optische Leistung des Flüssigkristallbildschirms und keine Kanten, an denen sich Insassen verletzen könnten. Da die Größe der Polarisationsfolie beliebig gewählt werden kann, ist es vorteilhaft möglich, den Flüssigkristallbildschirm in Träger mit engen und großen Rahmen zu integrieren.

Durch das Überlappen der Polarisationsfolie über den Rand des Flüssigkristallbildschirms und durch das Verbinden des überlappenden Bereichs der Polarisationsfolie mit dem Träger ist es vorteilhaft möglich, das Abdeckmittel aufzubringen, ohne dass das Abdeckmittel zwischen Polarisationsfolie und Flüssigkristallbildschirm gelangen kann.

Bevorzugt ist die Polarisationsfolie dazu konfiguriert, nur ein Licht mit einem bestimmten Polarisationswinkel durchzulassen. Es versteht sich, dass der Polarisationswinkel mit einem Austrittspolarisationswinkel des Flüssigkristallbildschirms übereinstimmt, weshalb das Licht vom Flüssigkristallbildschirm durchgelassen wird, während Licht, das nicht den richtigen Polarisationswinkel aufweist, absorbiert wird, wodurch in Umgebungen mit Sonnenlicht ein Sichtbarkeitsvorteil erzielt wird.

Auf die Polarisationsfolie ist bevorzugt eine Blendschutz-Reflexionsschutzschicht (antiglareantireflective, AGAR) aufgebracht, um die Menge an Sonnenlicht oder Umgebungslicht zu steuern, das zum Benutzer reflektiert wird. Als nicht einschränkendes Beispiel ist die AGAR-Schicht ein Blendschutz-/Reflexionsschutzfilm oder eine Blendschutz/Reflexionsschutzbeschichtung, der bzw. die auf die Polarisationsfolie aufgebracht ist. Als weiteres Beispiel kann die AGAR-Schicht ein separater Film sein, der auf die Polarisationsfolie laminiert ist oder als Teil der Polarisationsfolie integriert ist. Es versteht sich, dass verschiedene Konfigurationen benutzt werden können, um wenigstens eine von einer Blendschutz-(AG) oder Reflexionsschutz-(AR)-Fläche herzustellen.

Ein weiterer Gegenstand der vorliegenden Erfindung ist ein Flüssigkristallbildschirm, der mit dem erfindungsgemäßen Verfahren in eine Instrumententafel bzw. einen Träger integrierbar ist, sowie eine Instrumententafel mit einem Flüssigkristallbildschirm, der mit dem erfindungsgemäßen Verfahren in die Instrumententafel integriert ist. Ein weiterer Gegenstand der vorliegenden Erfindung ist ein, bevorzugt kapazitiver, Berührungsbildschirm mit einem erfindungsgemäßen Flüssigkristallbildschirm.

Ausführungsbeispiele der vorliegenden Erfindung sind in den Zeichnungen dargestellt und in der nachfolgenden Beschreibung näher erläutert.

### Kurze Beschreibung der Zeichnungen

Es zeigen
- Figuren 1a und 1b: eine schematische Ansicht eines Flüssigkristallbildschirm gemäß dem Stand der Technik,
- Figuren 2a und 2b: eine schematische Ansicht eines Flüssigkristallbildschirms gemäß einer Ausführungsform der vorliegenden Erfindung und
- Figuren 3a, 3b und 4: eine schematische Ansicht von einem Träger mit einem Flüssigkristallbildschirm, der mit dem erfindungsgemäßen Verfahren in den Träger integriert ist.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

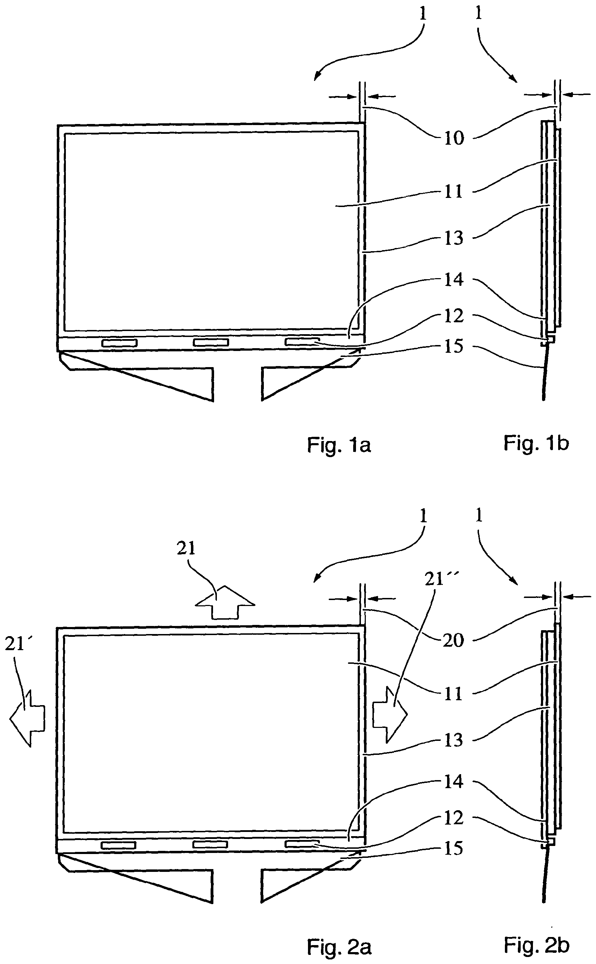

In **Figuren 1** **a und 1 b** ist ein Flüssigkristallbildschirm 1 gemäß dem Stand der Technik gezeigt. Figur 1 a zeigt eine Draufsicht und Figur 1b zeigt eine Seitenansicht des Flüssigkristallbildschirms 1. Der Flüssigkristallbildschirm 1 weist eine Flüssigkristallanordnung 13 auf. Die Flüssigkristallanordnung 13 weist ein Flüssigkristallmaterial auf, das zwischen zwei Glassubstraten angeordnet ist. Als nicht einschränkendes Beispiel weist die Flüssigkristallanordnung 13 Dünnschichttransistor-(TFT)-Technik auf. Es versteht sich, dass die Flüssigkristallanordnung 13 eine übliche Flüssigkristallanordnung sein kann, die mehrere Distanzstücke (nicht dargestellt) und Dichtungen (nicht dargestellt) aufweist, wie im Stand der Technik auf dem Gebiet der Anzeigen bekannt. Die Glassubstrate stellen eine Struktur bereit, an der Zusatzmaterialien, wie z. B. ein Farbfilter 14, aufgebracht werden. Am Farbfilter 14 ist ein Treiber 12 angeordnet. Der Treiber 12 steuert die Elemente der Flüssigkristallanordnung 13 an. Zum Zeitpunkt der Adressierung eines Bauelements der Flüssigkristallanordnung 13 wird eine Ladung auf das Bauelement aufgebracht, deren Höhe der Dateninformation entspricht. Danach wird das Bauelement (z. B. ein Dünnschichttransistor, TFT) wieder in einen vergleichsweise hochohmigen Zustand geschaltet, wodurch die Ladung und somit die Ansteuerung während einer Bildperiode im Wesentlichen erhalten bleibt.

Auf der Flüssigkristallanordnung 13 ist eine Polarisationsfolie 11 aufgebracht. Zwischen dem Rand der Polarisationsfolie 11 und den Kanten bzw. dem Rand des Flüssigkristallbildschirms 1 bzw. der Flüssigkristallanordnung 13 befindet sich eine Lücke 10, d. h. ein Bereich 10, in dem keine Polarisationsfolie 11 auf die Flüssigkristallanordnung 13 aufgebracht ist. Die Lücke 10 führt nachteilig dazu, dass Feuchtigkeit in oder unter die Polarisationsfolie 11 eindringen kann, was zu einem irreversiblen Ablösen und/oder Aufquellen der Polarisationsfolie 11 führt. Weiterhin ist die Kante der Polarisationsfolie 11 für Passagiere zugänglich und könnte abgezogen werden.

In **Figuren 2a und 2b** ist ein Flüssigkristallbildschirm 1 gemäß einer beispielhaften Ausführungsform der vorliegenden Erfindung gezeigt. Figur 2a zeigt eine Draufsicht und Figur 2b zeigt eine Seitenansicht des Flüssigkristallbildschirms 1. Auf die Flüssigkristallanordnung 13 des Flüssigkristallbildschirms 1 ist die Polarisationsfolie 11 aufgebracht, wobei die Polarisationsfolie 11 bevorzugt aufgeklebt ist. Erfindungsgemäß ist die Polarisationsfolie 11 derart angeordnet, dass die Polarisationsfolie 11 über den Rand des Flüssigkristallbildschirms 1 bzw. der Flüssigkristallanordnung 13 ragt bzw. den Rand des Flüssigkristallbildschirms 1 bzw. der Flüssigkristallanordnung 13 entlang einer Haupterstreckungsebene des Flüssigkristallbildschirms 1 überlappt. Die Pfeile 21, 21' und 21 deuten an, dass die Polarisationsfolie 11 bevorzugt lediglich auf drei Kanten bzw. Seiten des Flüssigkristallbildschirms 1 überlappt. Die vierte Kante bzw. Seite kann, z. B. durch einen metallisierten Rahmen, bedeckt werden. Die Breite des überlappenden Bereichs der Polarisationsfolie 11 ist mit dem Bezugszeichen 20 bezeichnet.

Bevorzugt werden integrierte Schaltkreise bzw. Treiber 12 an der Unterseite des Flüssigkristallbildschirms 1 platziert, die bevorzugt mittels COG (chip-on-glass)-Verfahren auf den Farbfilter 14 des Flüssigkristallbildschirms 1 aufgebracht sind. Der Farbfilter 14 ist mit herkömmlichen Verfahren mit der Flüssigkristallanordnung 13 verbunden. Bevorzugt wird an dieser Unterseite bzw. an dieser Kante ein Schutzrahmen bzw. ein Frontrahmen aus einem metallisierten Plastikmaterial als Schutz gegen elektrostatische Entladung platziert. Dies ist möglich, wenn der Flüssigkristallbildschirms 1 bevorzugt im Bereich des CID (central information display) in die Instrumententafel integriert wird. Am Flüssigkristallbildschirm 1 sind noch weitere herkömmliche Komponenten angeordnet, wie z.B. flexible Leiterplatten 15.

Zur übersichtlicheren Darstellung wurde in Figur 2a und Figur 2b das Abdichtmittel, welches erfindungsgemäß auf die Kanten der Polarisationsfolie 11 aufgebracht wurde, nicht dargestellt.

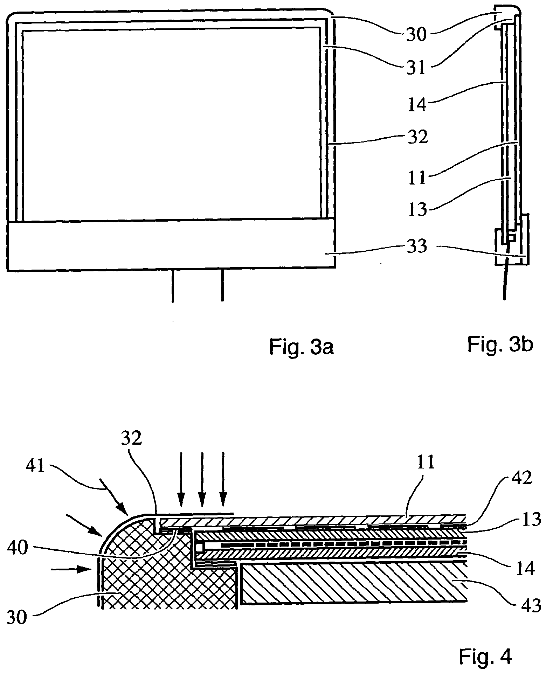

**Figur 3a** und **Figur 3b** zeigen eine erfindungsgemäße Instrumententafel 30 bzw. einen erfindungsgemäßen Träger 30, in die bzw. den ein Flüssigkristallbildschirm 1 mit dem erfindungsgemäßen Verfahren integriert ist. Bevorzugt weist der, bevorzugt aus Plastik gefertigte, Träger 30 abgerundete Kanten auf, um Passagiere bei einem Unfall zu schützen bzw. um Unfalltests besser zu bestehen, wobei bevorzugt diese abgerundeten Kanten durch das Aufbringen eines Abdichtmittels 32, bevorzugt ein Lack, erzeugt werden. Mit dem Bezugszeichen 31 ist diejenige Stelle bzw. derjenige Bereich gekennzeichnet, an der bzw. in dem der Flüssigkristallbildschirm 1 mit dem Träger 30 und die Polarisationsfolie 11 mit dem Träger 30 verbunden, bevorzugt verklebt, ist. Die Bedeckung mit dem Abdichtmittel 32 erfolgt mit herkömmlichen Verfahren. Bevorzugt weist der Träger 30 einen Schutzrahmen 33 aus einem metallisierten Plastikmaterial auf, der im Bereich der Treiber 12 angeordnet ist, wodurch vorteilhaft ein verbesserter Schutz gegen elektrostatische Entladung erreicht werden kann.

In **Figur 4** ist ein Schnitt durch den Träger 30 und den Flüssigkristallbildschirm 1 dargestellt. Hinter dem Farbfilter 14 und der Flüssigkristallanordnung 13 ist eine Hintergrundbeleuchtung 43 angeordnet. Bei der Hintergrundbeleuchtung 43 kann es sich um eine beliebige Lichtquelle handeln, die eine Lichtstrahlung zum Durchleuchten der Flüssigkristallanordnung 13 abgibt, da die Pixel der Flüssigkristallanordnung 13 im Wesentlichen Lichtventile sind, die zulassen, dass ein Teil der Lichtstrahlung der Hintergrundbeleuchtung 34 durch sie hindurchtritt. Das durch die Flüssigkristallanordnung 13 teilweise hindurchtretende Licht wird durch diese Lichtventile derart modifiziert, dass auf dem Flüssigkristallbildschirm 1 ein Bild, z. B. zur Darstellung von Fahrzeug-, Navigations- und/oder Unterhaltungsinformationen oder dgl., erzeugt wird.

Zwischen der Flüssigkristallanordnung 13 und der Polarisationsfolie 11 ist auf der Flüssigkristallanordnung 13 eine leitfähige Schicht 42 angeordnet. Als nicht einschränkendes Beispiel ist die leitfähige Schicht 42 aus einem transparenten leitfähigen Material, wie z. B. Indiumzinnoxid (ITO) oder anderen organischen transparenten Leitern, ausgebildet. In bestimmten Ausführungsformen bildet wenigstens ein ITO-Film die leitfähige Schicht 42. Beispielsweise kann der wenigstens eine ITO-Film als ein einzelner Film, ein Doppelfilm und in anderen speziellen Mustern ausgebildet sein. In bestimmten Ausführungsformen wird die leitfähige Schicht 42 auf das Substrat aufgebracht und zu einem gewünschten Muster geätzt. In Ausführungsformen, bei denen ITO-Filme benutzt werden, werden die einzelnen Filme entweder direkt oder indirekt an das Substrat gekoppelt. Als nicht einschränkendes Beispiel werden die ITO-Filme unter Verwendung von hochtransparentem Klebstoff (optically clear adhesive, OCA) und leitfähigen Übergangsmaterialien aneinander laminiert oder an das Substrat laminiert.

Zwischen dem Träger 30 und der Polarisationsfolie 11 bzw. dem Flüssigkristallbildschirm 1 befindet sich vorteilhaft keine Kante, sodass eine rahmenlose Integration des Flüssigkristallbildschirms 1 in den Träger 30 möglich ist. Figur 4 zeigt, wie der Flüssigkristallbildschirm 1 in den Träger 30 integriert ist, wobei diese Integration bevorzugt nur auf drei von vier Seiten bzw. Kanten erfolgt. Auf der vierten Seite bzw. Kante befindet sich bevorzugt ein metallisierter Rahmen, der die darunterliegenden Schaltungen vor elektrostatischer Entladung schützt.

Bevorzugt wird die Verbindung im Bereich 40 zwischen der Polarisationsfolie 11 und dem Träger 30 durch einen Kleberoboter hergestellt. Weiter bevorzugt wird das Abdichtmittel 32 bzw. der Lack durch einen Beschichtungsroboter aufgebracht, wobei der Lack entsprechend den Pfeilen 41 aufgebracht wird.

### Bezugszeichenliste

- 1: Flüssigkristallbildschirm
- 10: Lücke
- 11: Polarisationsfolie
- 12: Treiber
- 13: Flüssigkristallanordnung
- 14: Farbfilter
- 15: flexible Leiterplatte
- 20: Breite des überlappenden Bereichs
- 21, 21', 21": Pfeile
- 30: Instrumententafel/Träger
- 31: verklebter Bereich
- 32: Abdichtmittel
- 33: Schutzrahmen
- 40: verklebter Bereich zwischen Polarisationsfolie und Träger
- 41: Richtungspfeile
- 42: leitfähige Schicht
- 43: Hintergrundbeleuchtung

## Patentansprüche

1. Verfahren zur Integration eines Flüssigkristallbildschirms (1) in einen Träger (30), wobei in einem ersten Schritt ein Flüssigkristallbildschirm (1) bereitgestellt wird, wobei in einem zweiten Schritt eine Polarisationsfolie (11) auf den Flüssigkristallbildschirm (1) aufgebracht wird und wobei in einem dritten Schritt ein Rand und/oder eine Kante der Polarisationsfolie (11) zumindest teilweise mit einem Abdichtmittel (32) abgedichtet wird, wobei in einem vierten Schritt der Flüssigkristallbildschirm (1) in den Träger (30) eingesetzt und mit dem Träger (30) verbunden wird, wobei ein Zwischenraum (10), der sich zwischen der Polarisationsfolie (11) einerseits und dem Träger (30) andererseits bildet, abgedichtet wird, **dadurch kennzeichnet, dass** im vierten Schritt zur Abdichtung des Zwischenraums (10) ein Lack als Abdichtmittel (32) auf den Träger (30) und die Polarisationsfolie (11) aufgebracht wird..

2. Verfahren nach Anspruch 1, wobei im zweiten Schritt die Polarisationsfolie (11) auf den Flüssigkristallbildschirm (1) aufgeklebt wird.

3. Verfahren nach einem der vorhergehenden Ansprüche, wobei im dritten Schritt der Rand und/oder die Kanten der Polarisationsfolie (11) zumindest teilweise mit einem Lack und insbesondere einem Klarlack als Abdichtmittel (32) abgedichtet wird.

4. Verfahren nach einem der vorhergehenden Ansprüche, wobei im vierten Schritt der Flüssigkristallbildschirm (1) in eine Instrumententafel (30) eines Kraftfahrzeugs als Träger (30) eingesetzt wird.

5. Verfahren nach einem der vorhergehenden Ansprüche, wobei im vierten Schritt der Flüssigkristallbildschirm (1) mit dem Träger (30) durch Verkleben verbunden wird.

6. Flüssigkristallbildschirmanordnung (1), die durch ein Verfahren nach einem der Ansprüche 1 - 5 in einen Träger (30) integriert ist, aufweisend eine Flüssigkristallanordnung (13) und eine die Flüssigkristallanordnung (13) beleuchtende Hintergrundbeleuchtung (43), wobei die Flüssigkristallanordnung (13) mit einer Polarisationsfolie (11) bedeckt ist und wobei der Flüssigkristallbildschirm (1) und die Polarisationsfolie (11) zumindest teilweise mit einem Abdichtmittel (32) bedeckt ist, wobei die Polarisationsfolie (11) zumindest teilweise über einen Rand und/oder über Kanten des Flüssigkristallbildschirms (1) ragt und/oder den Rand und/oder die Kanten des Flüssigkristallbildschirms (1) überlappt, wobei derjenige Teil der Polarisationsfolie (11), der über den Rand des Flüssigkristallbildschirms (1) ragt, vorzugsweise ebenfalls mit dem Träger (30) verbunden ist.

7. Flüssigkristallbildschirmanordnung (1) nach Anspruch 6, wobei die Polarisationsfolie (11) mittels eines Additivverfahrens, insbesondere eines Haftverfahrens, einer Verklebung und/oder eines Laminierungsverfahrens, mit dem Flüssigkristallbildschirm (1) verbunden ist.

8. Flüssigkristallbildschirmanordnung (1) nach einem der Ansprüche 6 oder 7, wobei die Polarisationsfolie (11) dazu konfiguriert ist, nur Licht mit einem bestimmten Polarisationswinkel durchzulassen.

9. Flüssigkristallbildschirmanordnung (1) nach einem der Ansprüche 6 bis 8, wobei auf die Polarisationsfolie (11) eine Blendschutz-Reflexionsschutzschicht (antiglareantireflective, AGAR) aufgebracht ist.

10. Flüssigkristallbildschirmanordnung (1) nach Anspruch 9, wobei die Blendschutz-Reflexionsschutzschicht ein Blendschutz-/Reflexionsschutzfilm oder eine Blendschutz-/Reflexionsschutzbeschichtung ist, der bzw. die auf die Polarisationsfolie (11) aufgebracht ist, und/oder wobei die Blendschutz-Reflexionsschutzschicht ein separater Film ist, der auf die Polarisationsfolie (11) laminiert ist oder als Teil der Polarisationsfolie (11) integriert ist.

11. Flüssigkristallbildschirmanordnung (1) nach einem der Ansprüche 6 bis 10, wobei der Flüssigkristallbildschirm (1) mittels eines Verfahrens gemäß einem der Ansprüche 1 bis 7 in einen Träger (30) und insbesondere in eine Instrumententafel (30) eines Kraftfahrzeugs integriert ist.

12. Kapazitiver Berührungsbildschirm aufweisend eine Flüssigkristallbildschirmanordnung (1) nach einem der Ansprüche 8 bis 14.

## Claims

1. Method for integrating a liquid crystal screen (1) into a carrier (30), wherein, in a first step, a liquid crystal screen (1) is provided, wherein, in a second step, a polarisation film (11) is applied on to the liquid crystal screen (1) and wherein, in a third step, a margin and/or an edge of the polarisation film (11) is sealed at least partially with a sealant (32), wherein, in a fourth step, the liquid crystal screen (1) is inserted into the carrier (30) and is attached to the carrier (30), wherein an interspace (10), formed between the polarisation film (11) on the one hand and the carrier (30) on the other hand, is sealed, **characterised in that**, in the fourth step, a lacquer is applied as a sealant (32) to the carrier (30) and to the polarisation film (11) to seal the interspace (10).

2. Method according to claim 1, wherein, in the second step, the polarisation film (11) is glued on to the liquid crystal screen (1).

3. Method according to any one of the preceding claims, wherein, in the third step, the margin and/or the edges of the polarisation film (11) is/are at least partially sealed with a lacquer and, in particular, a clear lacquer as the sealant (32).

4. Method according to any one of the preceding claims, wherein, in the fourth step, the liquid crystal screen (1) is inserted into an instrument panel (30) of a motor vehicle as the carrier (30).

5. Method according to any one of the preceding claims, wherein, in the fourth step, the liquid crystal screen (1) is bonded to the carrier (30) by gluing.

6. Liquid crystal screen arrangement (1), which is integrated into a carrier (30) by a method according to any one of claims 1 - 5, having a liquid crystal arrangement (13) and backlighting (43) illuminating the liquid crystal arrangement (13), wherein the liquid crystal arrangement (13) is covered with a polarisation film (11) and wherein the liquid crystal screen (1) and the polarisation film (11) are covered at least partially with a sealant (32), wherein the polarisation film (11) projects at least partially over a margin and/or over edges of the liquid crystal screen (1) and/or overlaps the margin and/or the edges of the liquid crystal screen (1), wherein that part of the polarisation film (11) which projects over the margin of the liquid crystal screen (1) is preferably also connected to the carrier (30).

7. Liquid crystal screen arrangement (1) according to claim 6, wherein the polarisation film (11) is bonded to the liquid crystal screen (1) by means of an additive method, in particular a bonding method, by gluing and/or by a lamination method.

8. Liquid crystal screen arrangement (1) according to any one of the claims 6 or 7, wherein the polarisation film (11) is configured to allow light at a particular polarisation angle only to pass through.

9. Liquid crystal screen arrangement (1) according to any one of the claims 6 to 8, wherein an antiglare- antireflective protection layer (AGAR) is applied to the polarisation film (11).

10. Liquid crystal screen arrangement (1) according to claim 9, wherein the antiglareantireflective protection layer is an antiglare- antireflective protection film or an antiglareantireflective protection coating which is/are applied to the polarisation film (11), and/or wherein the antiglare- antireflective protection layer is a separate film which is laminated to the polarisation film (11) or is incorporated as a part of the polarisation film (11).

11. Liquid crystal screen arrangement (1) according to any one of the claims 6 to 10, wherein the liquid crystal screen (1) is integrated into a carrier (30) by means of a method according to any one of the claims 1 to 7 and, in particular, into an instrument panel (30) of a motor vehicle.

12. Capacitive touch screen having a liquid crystal screen arrangement (1) according to any one of the claims 8 to 14.

## Revendications

1. Procédé pour l'intégration d'un écran à cristaux liquides (1) dans un support (30), dans lequel, dans une première étape, un écran à cristaux liquides (1) est prévu, dans lequel, dans une deuxième étape, un film de polarisation (11) est appliqué sur l'écran à cristaux liquides (1) et dans lequel, dans une troisième étape, un bord et/ou une tranche du film de polarisation (11) est au moins partiellement fermé par un matériau d'étanchéité (32), dans lequel, dans une quatrième étape, l'écran à cristaux liquides (1) est inséré dans le support (30) et relié avec le support (30), dans lequel un espace intermédiaire (10), situé entre le film de polarisation (11) d'une part et le support (30) d'autre part, est rendu étanche, **caractérisé en ce qu'**un vernis est appliqué sous forme de moyen d'étanchéité (32) sur le support (30) et le film de polarisation (11), dans la quatrième étape d'étanchéification de l'espace intermédiaire (10).

2. Procédé selon la revendication 1, dans lequel le film de polarisation (11) est collé sur l'écran à cristaux liquides (1) dans la deuxième étape.

3. Procédé selon l'une quelconque des revendications précédentes, dans lequel le bord et/ou les tranches du film de polarisation (11) est au moins partiellement rendu étanche par un vernis laque et plus particulièrement un vernis transparent comme moyen d'étanchéité (32), dans la troisième étape.

4. Procédé selon l'une quelconque des revendications précédentes, dans lequel l'écran à cristaux liquides (1) est inséré dans un tableau de bord (30) d'un véhicule à moteur comme support (30), dans la quatrième étape.

5. Procédé selon l'une quelconque des revendications précédentes, dans lequel l'écran à cristaux liquides (1) est relié au support (30) par collage, dans la quatrième étape.

6. Agencement d'écran à cristaux liquides (1), intégré par un procédé selon l'une des revendications 1 - 5 dans un support (30), comprenant un agencement de cristaux liquides (13) et un rétro-éclairage lumineux (43) éclairant l'agencement de cristaux liquides (13), dans lequel l'agencement de cristaux liquides (13) est recouvert d'un film de polarisation (11) et dans lequel l'écran à cristaux liquides (1) et le film de polarisation (11) sont au moins partiellement recouverts d'un moyen d'étanchéité (32), dans lequel le film de polarisation (11) dépasse au moins partiellement d'un bord et/ou de tranches de l'écran à cristaux liquides et/ou le bord et/ou les tranches de l'écran à cristaux liquides (1) se chevauchent, dans lequel ladite partie du film de polarisation (11), qui dépasse au-dessus du bord de l'écran à cristaux liquides (1), est également relié au support (30).

7. Agencement d'écran à cristaux liquides (1) selon la revendication 6, dans lequel le film de polarisation (11) est relié au moyen d'un procédé additif, en particulier un procédé de collage, une liaison adhésive et/ou un procédé de stratification, à l'écran à cristaux liquides (1).

8. Agencement d'écran à cristaux liquides (1) selon l'une des revendications 6 ou 7, dans lequel le film de polarisation (11) est configuré pour ne laisser pénétrer la lumière que dans un angle de polarisation défini.

9. Agencement d'écran à cristaux liquides (1) selon l'une des revendications 6 à 8, dans lequel une couche anti-aveuglante, anti-réfléchissante (antiglare-antireflective, AGAR) est appliquée sur le film de polarisation (11).

10. Agencement d'écran à cristaux liquides (1) selon la revendication 9, dans lequel la couche anti-aveuglante, anti-réfléchissante est un film anti-aveuglant, anti-réfléchissant ou une enduction anti-aveuglante, anti-réfléchissante, appliqué(e) sur le film de polarisation (11), et/ou la couche anti-aveuglante, anti-réfléchissante est un film séparé, qui est stratifiée sur le film de polarisation (11) et intégrée comme partie du film de polarisation (11).

11. Agencement d'écran à cristaux liquides (1) selon l'une des revendications 6 à 10, dans lequel l'écran à cristaux liquides (1) est intégré à l'aide d'un procédé selon l'une des revendications 1 à 7 à un support (30) et en particulier un tableau de bord (30) de véhicule.

12. Ecran tactile capacitif comprenant un agencement d'écran à cristaux liquides (1) selon l'une des revendications 8 à 14.
